# FASCICULE DE BREVET EUROPEEN

(11) **EP 1 364 873 B1**
(45) Date de publication et mention de la délivrance du brevet: **05.10.2005**
(21) Numéro de dépôt: 03290880.8
(22) Date de dépôt: 09.04.2003
(51) Int. Cl.: B64C 27/33

(54) **Dispositif combiné amortisseur-rotule pour rotor d'hélicoptère**
Kombinierte Vibrationsdämpfer-Kugelgelenk- Vorrichtung für einen Hubschrauberrotor
Snubber-vibration dumper for helicopter rotor

(30) Priorité: 24.05.2002 FR 0206337
(43) Date de publication de la demande: 26.11.2003
(73) Titulaire: HUTCHINSON, 75008 Paris (FR)
(72) Inventeur: Levallard, Patrice, 94360 Bry sur Marne (FR); Sieg, Thierry, Encinitas, CA 92024 (US)
(74) Mandataire: Jacquard, Philippe Jean-Luc

(56) Documents cités:
- EP-A- 0 451 084
- US-A- 5 228 834
- US-A- 6 113 352
- PANDA B ET AL: "AEROELASTIC STABILITY WIND TUNNEL TESTING WITH ANALYTICAL CORRELATION OF THE COMANCHE BEARINLESS MAIN ROTOR" JOURNAL OF THE AMERICAN HELICOPTER SOCIETY, AMERICAN HELICOPTER SOCIETY. NEW YORK, US, vol. 42, no. 3, 1 juillet 1997 (1997-07-01), pages 207-217, XP000693775 ISSN: 0002-8711

## Description

La présente invention concerne un dispositif combiné amortisseur-rotule destiné à être monté entre d'une part un bras flexible reliant une pale d'hélicoptère à un moyeu d'un rotor, et d'autre part un manchon de commande de pas de ladite pale.

On connaît du Brevet US 4,244,677 et EP 451084 (UNITED TECHNOLOGIES CORPORATION) un dispositif combiné comprenant deux modules élémentaires comprenant chacun un amortisseur lamifié et un élément de rotule lamifié. L'amortisseur lamifié comporte un empilement de couches métalliques et de couches élastomères alternées, et s'étendant entre une extrémité externe et une extrémité interne de l'amortisseur. A son extrémité externe, l'amortisseur lamifié comporte un élément de montage sur le manchon de commande de pas, et il est solidaire à son extrémité interne d'une extrémité externe de l'élément de rotule du module, dont l'extrémité interne présente un élément de fixation sur le bras flexible.

Un tel dispositif combiné (également dénommé « snubber-vibration damper » ou « snubber-damper ») est utilisé avec un bras flexible (« yoke» ou « spar ») d'un moyeu rotor qui ne présente pas le palier à roulement à billes (rotor BMR ou « bearingless main rotor »), et il a pour fonction de procurer un positionnement des composants du rotor (pales/lame flexible/coiffe ou manchon de commande de pas) et un amortissement du mode propre des pales.

Un moyeu rotor dit "BMR" est constitué d'une structure flexible « spar ou yoke » c'est-à-dire un bras ou lame généralement composite reliant la pale au moyeu rotor et tendue par la force centrifuge imposée par la rotation du rotor autour de ce moyeu. Un manchon (« torque tube ») qui entoure cette lame, est fixé à la base de la pale et a pour fonction d'imposer une rotation autour de l'axe principal commun à la pale et au manchon. Cette commande dite « de pas » permet le pilotage de l'hélicoptère.

Compte tenu des efforts et déplacements résultant de cette commande de pas imposée et de l'interaction aérodynamique de la pale avec l'air environnant, et également de l'interaction entre l'ensemble rotor et la structure de l'hélicoptère, il est nécessaire :
- de maintenir le positionnement (centrage) du « torque tube » ou manchon par rapport à la lame « spar ou yoke ». C'est la fonction butée, ou « snubber » destinée à reprendre essentiellement en compression les efforts de battement de la pale.
- de découpler en rotation le manchon et la lame autour de leur axe commun. En effet, la rotation imposée par la commande de pas se traduit par une rotation très différente entre le manchon et la lame due à la géométrie du système. Le dispositif combiné doit donc s'accommoder de cette rotation différentielle.
- de permettre un déplacement de translation lié à la traînée aérodynamique de la pale associée à sa rotation. La traînée impose un cisaillement alternatif dans le plan général du rotor, perpendiculairement au plan de l'excitation de battement décrite plus haut.

Les deux documents (US 4,244,677 et EP 451084) mentionnés ci-dessus décrivent un élément combiné (« snubber damper ») constitué d'un empilement d'une partie généralement sphérique et d'une partie plane réalisées chacune dans un matériau différent et permettant effectivement de répondre aux trois fonctions mentionnées ci-dessus.

La structure lamifiée « laminated » apporte la résistance aux efforts de compression ou de battement. La géométrie générale sphérique permet en outre le découplage en rotation du système. La partie plane permet d'accommoder le mouvement de translation lié à la traînée aérodynamique.

Ces éléments combinés amortisseur-rotule (« snubber damper ») sont associés tête-bêche par deux pour former un ensemble destiné à l'installation et au fonctionnement de chacune des pales du rotor.

Le Brevet US 4,244,677 décrit essentiellement un moyen d'application externe d'une précontrainte. Cette précontrainte est appliquée simultanément à chacun des deux modules associant un amortisseur plan et un élément de rotule dans le but de garantir l'absence de contrainte de traction dans la structure de chaque élément et en prolonger la durée de vie. On remarquera cependant que cette précontrainte est la même pour l'amortisseur plan et pour l'élément de rotule.

La Société Demanderesse a mis en évidence qu'une structure combinée amortisseur/rotule telle que décrite ci-dessus pose deux problèmes fondamentaux qui finalement ne permettent pas un fonctionnement optimal du rotor et des combinés amortisseurs eux-mêmes.
- Le découplage en rotation réalisé par la partie sphérique du combiné n'est pas parfait en raison de la flexibilité générale des combinés amortisseur.
- La combinaison des charges et déplacements imposés ne peut être calculé qu'avec la prise en compte de l'interaction mutuelle de ces charges et déplacements ainsi que de leur interaction avec la flexibilité particulière des éléments combinés amortisseur autour de leurs différents axes,
ce qui fait que le centre de rotation instantané du manchon dépend de la combinaison des déplacements et charges imposés et ne se situe ni au centre géométrique de l'installation du combiné amortisseur, ni sur l'axe principal de symétrie du manchon.
- La combinaison des charges résultant des flexibilités est complexe, et elle dépend de la réalisation particulière des structures des éléments combinés amortisseur.

Il résulte de ce qui précède qu'il existe un besoin d'améliorer la durée de vie de tels dispositifs combinés amortisseur-rotule, en remédiant à au moins un des problèmes précités.

La présente invention repose notamment sur la reconnaissance du fait qu'en présence de contraintes de cisaillement en mode de traînée aérodynamique, les deux armatures intermédiaires qui assurent la liaison entre les parties sphériques et les parties planes ne restent pas parallèles.

L'idée de base de la présente invention est d'introduire une liaison de rigidification ou de solidarisation entre les deux modules au niveau de l'interface entre l'amortisseur lamifié plan et l'élément de rotule.

L'invention concerne ainsi un dispositif combiné amortisseur-rotule destiné à être monté entre d'une part un bras flexible reliant une pale d'hélicoptère à un moyeu rotor et d'autre part un manchon de commande de pas de ladite pale et comprenant deux modules élémentaires comprenant chacun un amortisseur lamifié et un élément de rotule lamifié, l'amortisseur lamifié, dont l'amortissement peut être apporté, de manière connue, par du caoutchouc ou par un dispositif hydraulique interne, s'étendant entre une extrémité externe et une extrémité interne et présentant à son extrémité externe un élément de montage sur le manchon de commande de pas de ladite pale d'hélicoptère, et l'élément de rotule lamifié présentant un empilement de couches métalliques et élastomères, l'amortisseur lamifié étant solidaire à son extrémité interne d'une extrémité externe de l'élément de rotule dont l'extrémité interne présente un élément de fixation sur ledit bras flexible, caractérisé en ce qu'il comporte au moins un élément de liaison assurant une liaison de rigidification entre les extrémités externes des deux éléments de rotule des deux modules élémentaires constituant le dispositif combiné.

Ladite solidarisation entre l'extrémité interne de l'élément lamifié plan et l'extrémité externe de l'élément de rotule peut être réalisée à l'aide d'au moins une armature intermédiaire.

Selon une première variante, le dispositif est caractérisé en ce que l'élément de liaison est un tube entourant les deux éléments de rotule et assurant ladite solidarisation entre les amortisseurs lamifiés et les éléments de rotule des deux modules élémentaires constituant le dispositif combiné.

Selon une deuxième variante, le dispositif est caractérisé en ce que l'élément de liaison est un tube ouvert assurant la solidarisation entre un amortisseur lamifié et un élément de rotule d'un des deux modules élémentaires, les bords ouverts dudit tube ouvert étant solidaires de l'extrémité externe de l'élément de rotule de l'autre module élémentaire.

Selon une autre variante, un élément de liaison est une pièce reliant les extrémités externes situées en vis-à-vis des deux éléments de rotule du dispositif combiné. Ladite pièce est avantageusement curviligne et présente une concavité dirigée vers les éléments de rotule du dispositif combiné, ce qui permet de contourner latéralement le bras flexible.

Selon une autre variante, une dite pièce est un tirant, les tirants étant par exemple eu nombre de quatre.

Selon une variante préférée, le dispositif est caractérisé en ce qu'il comporte une paire d'éléments de liaison dont chacun présente une région centrale formant une liaison entre l'extrémité interne d'un amortisseur lamifié et l'extrémité externe d'un élément de rotule et qui est bordée au moins sur un côté latéral par une région latérale solidarisée à une région latérale correspondante de l'autre élément de liaison de la paire.

Le ou les éléments de liaison peuvent être avantageusement dimensionnés de manière que, après montage du dispositif combiné entre un bras flexible et un manchon de commande de pas, une première pré-contrainte de compression soit appliquée aux deux éléments de rotule de dispositif combiné.

Les éléments de montage du dispositif combiné sur le manchon de commande de pas sont avantageusement dimensionnés de manière que, après montage du dispositif combiné, une deuxième contrainte de compression soit appliquée aux éléments lamifiés.

La première et la deuxième précontrainte peuvent avoir des valeurs différentes, ce qui permet de les choisir de manière optimale pour chacun des éléments (amortisseur ou élément de rotule) du dispositif combiné.

L'invention concerne également un rotor d'hélicoptère comprenant au moins un dispositif combiné tel que défini ci-dessus, monté entre un bras flexible et un manchon de commande de pas d'une pale d'hélicoptère. Ce montage peut être effectué de manière à appliquer une première précontrainte de compression aux éléments de rotule, et/ou une dite deuxième précontrainte de compression aux amortisseurs lamifiés, la première et la deuxième précontrainte étant avantageusement différentes.

D'autre caractéristiques et avantages de l'invention apparaîtront mieux à la lecture de la description ci-après en liaison avec les dessins annexés, dans lesquelles figures 1 à 5 représentent des modes de réalisation de l'invention, et les figures 6 et 7 illustrent des avantages de l'invention.

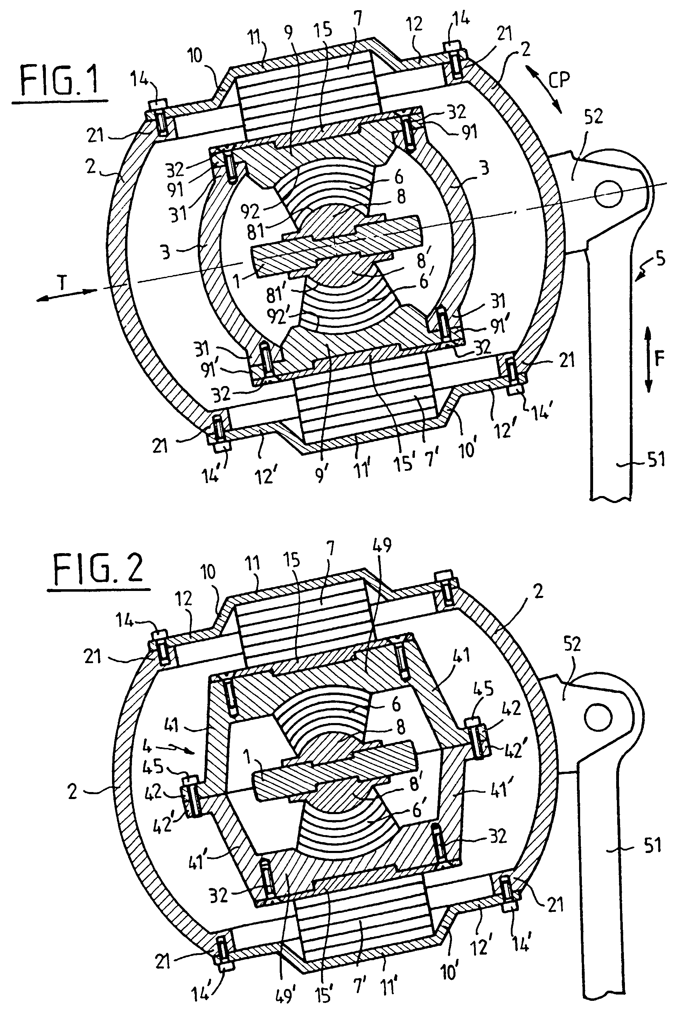

A la figure 1, un rotor comporte, pour la commande d'une pale, une lame 1, généralement en matériau composite et un manchon 2 (« torque tube ») qui entoure la lame 1 et qui, sous l'action d'un élément d'actionnement de pas 51 déplaçable dans la direction F et reliée en 52 au pourtour du manchon 2, permet la commande du pas de la pale, et donc le pilotage de l'hélicoptère.

Le dispositif combiné présente deux modules montés de part et d'autre de la lame 1 dont chacun présente en série un élément de rotule lamifié (6, 6') et un amortisseur lamifié plan (7, 7').
La fixation de l'élément de rotule lamifiée (6, 6') sur la lame 1 est assurée par l'intermédiaire de la plaque interne (8, 8') qui présente un contour incurvé (81, 81') correspondant à la couche la plus interne de la structure lamifiée métallique/élastomère cylindrique ou hémisphérique, constituant chaque élément de rotule (6, 6').

A l'extérieur, l'élément de rotule (6, 6') présente une plaque externe (9, 9') sur laquelle est fixée par des vis 32 une plaque interne (15, 15') d'un élément amortisseur lamifié plan (7, 7'). Enfin, chaque élément lamifié plan (7, 7') présente une plaque externe (10, 10') dont la partie centrale 11' correspond à l'empilement des couches lamifiées, et qui est bordée de chaque côté par des prolongements (12, 12') permettant une fixation aux extrémités 21 du manchon 2 par des vis (14, 14').

Selon l'invention, le plan commun aux éléments 6 et 7, matérialisé par la plaque 9 ou 15 est solidarisé au plan commun aux éléments 6' et 7', matérialisé par la plaque 9' ou 15' à l'aide d'un ou plusieurs éléments de liaison.

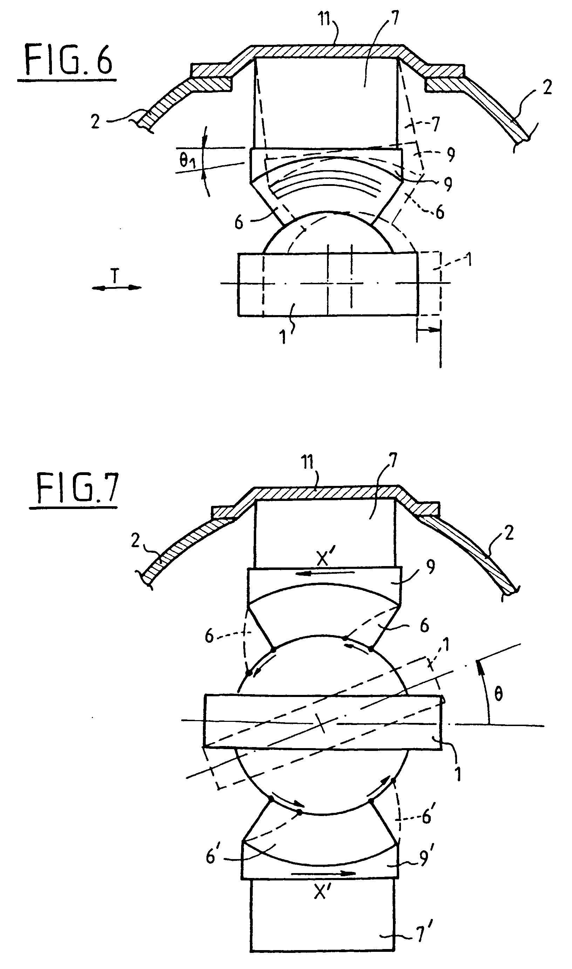

Ceci permet d'éviter que, sous l'action du cisaillement généré par les forces de trainée T de la pale (voir figure 6), qui sont reprises par le bras 1 avec translation relative (flèche X) entre le bras 1 et le manchon 2 (voir les deux positions en traits pleins et en pointillés à la figure 6), ne se produise un défaut de parallélisme entre les plans précités (rotation θ1 de la plaque 9 à la figure 6), qui est dû notamment au fait que l'élément lamifié plan ne peut pas être rendu suffisamment raide pour empêcher une rotation.

Ceci permet également d'éviter que lors d'une rotation relative θ entre la lame 1 et le manchon 2, qui est due à la commande de pas, ne se produise un décalage anti-symétrique dans le plan de trainée entre les armatures 9 et 9' (flèches X' de la figure 7.)

Selon l'invention, on ajoute une structure intermédiaire 3 ouverte ou fermée formant par exemple un « anneau de couplage, entourant la lame 1 (« spar ou yoke) et située à l'intérieur du manchon 2 (« torque tube »).

Chaque élément de combiné amortisseur comporte une armature intermédiaire de transition (9, 9') qui assure la liaison entre la partie sphérique (rotule 6, 6') et la partie plane (amortisseur 7, 7').

Les deux armatures intermédiaires appartenant chacune à l'un des modules du dispositif combiné sont reliées par cette structure intermédiaire 3.

Cette structure présente une forme adéquate et est constituée d'un matériau adapté (par exemple métal ou matériau synthétique renforcé de fibres, dit « composite ») pour relier de façon suffisamment rigide les deux armatures intermédiaires précitées.
A1) De cette manière, et il s'agit d'une différence importante, on assure un quasi-parallélisme des deux armatures intermédiaires et leur rotation et/ou translation simultanée d'un bloc. La fonction de découplage de la rotation est alors assurée de manière beaucoup plus rigoureuse. De ce fait, la combinaison de déplacement et de charges est beaucoup plus favorable. Les éléments amortisseurs plans (7, 7') sont sensiblement moins sollicités en rotation/flexion tandis que les éléments de rotule (6, 6') sont moins sollicités en translation.
A2) Le travail entre les deux modules formant le dispositif combiné amortisseur-rotule est d'autre part mieux réparti. Ceci améliore aussi le fonctionnement des amortisseurs plans. Dans la configuration de l'art antérieur en effet, la rotation et la translation s'ajoutent pour un des modules du dispositif combiné, tandis que ces deux sollicitations principales se soustraient pour le second module disposé de l'autre côté de la lame 1. Il en résulte une dissymétrie de fonctionnement importante qui est corrigée en grande partie dans le cas de la présente invention.

D'autre part, en procédant à l'assemblage du combiné amortisseur, il est possible d'appliquer une pré-contrainte différente sur la partie rotule et la partie amortisseur plan. Ceci est réalisable sans nuire particulièrement à la méthode générale d'assemblage des éléments combinés amortisseurs sur le rotor, soit dans leur partie centrale sur la lame 1, soit sur leur partie externe, manchon 2 ou « torque tube ». Cette pré-contrainte différenciée entre les deux éléments (amortisseur plan et élément de rotule d'un même module) obtenue par le dimensionnement des pièces 10, 10' et des éléments de liaison permet d'ajuster celle-ci autant que possible à la combinaision de charges vue par chacun de ces éléments.

Ceci est notablement plus efficace que l'application d'une valeur moyenne commune comme dans le Brevet US 4 244 677 qui peut se révéler trop faible pour l'un des éléments et trop forte pour l'autre.

L'adjonction d'une liaison de rigidification selon l'invention permet ainsi sans modifier notablement la conception du dispositif combiné un gain important sur les contraintes de traction résultant de la combinaison des déplacements et efforts, d'où une augmentation notable de la durée de vie du dispositif combiné. A ceci s'ajoute un découplage des sollicitations de trainée et d'incidence de la pale et un meilleur positionnement relatif du manchon 2 par rapport à la lame 1.

A la figure 1, la rigidification est assurée par un ou deux éléments 3 qui sont fixés par les vis 32 entre les extrémités 91 et 91' en vis-à-vis des plaques 9 et 9'. Il peut s'agir d'éléments continus (par exemple une plaque incurvée tournant sa concavité vers la lame 1, comme représenté à la figure 1) ou bien d'éléments discontinus par exemple des tirants 35 comme représenté à la figure 5.

A la figure 2, la liaison mécanique est assurée par des prolongements 41, 41' de plaques intermédiaires 49, 49' logées entre les éléments (6 et 7, 6' et 7'). Ces prolongements 41, 41' présentent des pattes de fixation 42, 42' permettant un montage à l'aide de vis 45.

Un élément de rigidification peut également être moulé sur un élément de rotule lamifié, par exemple dans la continuité d'une armature intermédiaire 9, 9'. Les éléments moulés sont ensuite fixés entre eux pour assurer la rigidification.

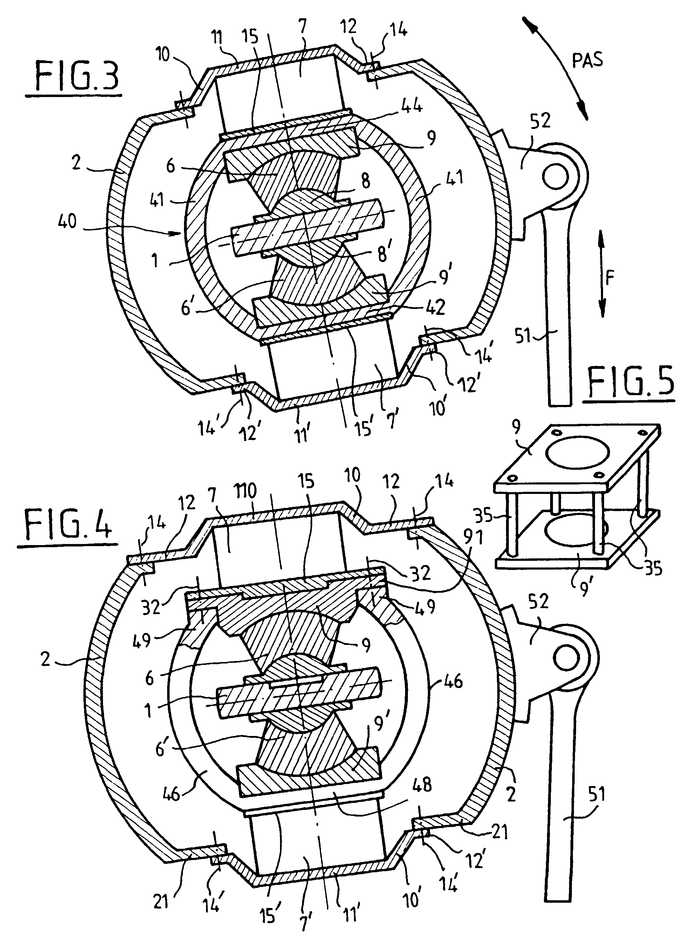

A la figure 3, la liaison mécanique est assurée par un tube 40 qui présente un méplat 44 logé entre les éléments 6 et 7 et un méplat 42 logé entre les éléments 6' et 7', et dont le reste du pourtour 41 assure la liaison mécanique recherchée.

A la figure 4, la liaison mécanique est assurée par un tube ouvert présentant un méplat 48 logé entre les éléments 6' et 7' et dont le reste du pourtour 46 assure la liaison mécanique recherchée. A cet effet, les extrémités 49 du tube ouvert sont fixées par les vis 32 aux extrémités 91 de la plaque 9 située entre les éléments 6 et 7.

## Revendications

1. Dispositif combiné amortisseur-rotule destiné à être monté entre d'une part un bras flexible (1) reliant une pale d'hélicoptère à un moyeu rotor et d'autre part un manchon (2) de commande de pas de ladite pale et comprenant deux modules élémentaires comprenant chacun un amortisseur plan lamifié (7,7') et un élément de rotule lamifié (6,6'), l'amortisseur lamifié (7,7') s'étendant entre une extrémité externe et une extrémité interne et présentant à son extrémité externe un élément de montage (10,10') sur le manchon (2) de commande de pas de ladite pale d'hélicoptère, et l'élément de rotule lamifié (6,6') présentant un empilement de couches métalliques et élastomères, l'amortisseur lamifié (7,7') étant solidaire à son extrémité interne d'une extrémité externe de l'élément de rotule (6,6') dont l'extrémité interne présente un élément de fixation (8,8') sur ledit bras flexible (1), **caractérisé en ce qu'**il comporte au moins un élément de liaison (3, 4, 4', 35, 41, 41', 46) assurant une liaison de rigidification entre les extrémités externes (9, 15, 9', 15') des deux éléments de rotule (6, 6') des deux modules élémentaires constituant le dispositif combiné.

2. Dispositif selon la revendication 1, **caractérisé en ce qu'**il comporte au moins une armature intermédiaire (9, 9', 49, 49', 15, 15') assurant ladite solidarisation entre l'extrémité interne de l'amortisseur lamifié (7, 7') et l'extrémité externe de l'élément de rotule (6, 6').

3. Dispositif selon une des revendications 1 ou 2, **caractérisé en ce que** l'élément de liaison est un tube (41, 42, 44) entourant les deux éléments de rotule et assurant ladite solidarisation entre les amortisseurs lamifiés (7,7') et les éléments de rotule (6,6') des deux modules élémentaires constituant le dispositif combiné.

4. Dispositif selon une des revendications 1 ou 2, **caractérisé en ce que** l'élément de liaison est un tube ouvert (46, 48) assurant la solidarisation (48) entre un amortisseur lamifié (7') et un élément de rotule (6') d'un des deux modules élémentaires, les bords ouverts (49) dudit tube ouvert étant solidaires de l'extrémité externe de l'élément de rotule (6) de l'autre module élémentaire.

5. Dispositif selon une des revendications 1 ou 2, **caractérisé en ce qu'**un dit élément de liaison est une pièce (3, 35) reliant les extrémités externes situées en vis-à-vis des deux éléments de rotule du dispositif combiné.

6. Dispositif selon la revendication 5, **caractérisé en ce qu'**un dit élément de liaison (3) est incurvé et présente une concavité dirigée vers lesdits éléments de rotule (6, 6') du dispositif combiné.

7. Dispositif selon la revendication 5, **caractérisé en ce qu'**une dite pièce est un tirant (35).

8. Dispositif selon la revendication 1, **caractérisé en ce qu'**il comporte une paire d'éléments de liaison (4, 4') dont chacun présente une région centrale (49, 49') formant une liaison entre l'extrémité interne d'un amortisseur lamifié (7, 7') et l'extrémité externe d'un élément de rotule (6, 6') et qui est bordée au moins sur un côté latéral par une région latérale (41, 41') solidarisée à une région latérale correspondante (41', 41) de l'autre élément de liaison (4, 4') de la paire.

9. Dispositif selon la revendication 1, **caractérisé en ce que** l'élément de liaison est moulé sur un élément de rotule (6).

10. Dispositif selon une des revendications précédentes, **caractérisé en ce que** le ou les éléments de liaison (3, 4, 4', 35, 41, 41', 46) sont dimensionnés de manière que, après montage du dispositif combiné, une première pré-contrainte de compression soit appliquée aux éléments de rotule (6, 6').

11. Dispositif selon une des revendications précédentes, **caractérisé en ce que** les éléments de montage (10) sur le manchon (2) de commande de pas sont dimensionnés de manière que, après montage du dispositif combiné, une deuxième pré-contrainte de compression soit appliquée aux amortisseurs lamifiés (7, 7').

12. Dispositif selon les revendications 10 et 11 prises ensemble, **caractérisé en ce que** la première et la deuxième pré-contrainte ont des valeurs différentes.

13. Rotor d'hélicoptère, **caractérisé en ce qu'**il comporte au moins un dispositif combiné selon une des revendications précédentes, monté entre un dit bras flexible (1) et un dit manchon (2) de commande de pas.

14. Rotor d'hélicoptère selon la revendication 13, **caractérisé en ce qu'**au moins un dispositif combiné est monté avec une première pré-contrainte appliquée aux éléments de rotule (6, 6').

15. Rotor d'hélicoptère selon une des revendications 13 ou 14, **caractérisé en ce qu'**au moins un dispositif combiné est monté avec une deuxième pré-contrainte de compression appliquée aux éléments lamifiés (7, 7').

16. Rotor d'hélicoptère selon les revendications 14 et 15, **caractérisé en ce que** la première et la deuxième pré-contrainte ont des valeurs différentes.

## Claims

1. A combined ball-and-damper device for mounting between firstly a flexible spar (1) connecting a helicopter blade to a rotor hub and secondly a torque tube (2) for controlling the pitch of said blade, the device comprising two individual modules each comprising a plane laminated damper (7, 7') and a laminated ball (6, 6'), the laminated damper (7, 7') extending between an outer end and an inner end and presenting at its outer end a connection element (10, 10') for connection to the torque tube (2) for controlling the pitch of said helicopter blade, and the laminated ball (6, 6') presenting a stack of metal and elastomer layers, the laminated damper (7, 7') being secured at its inner end to an outer end of the ball (6, 6') whose own inner end presents a fixing element (8, 8') for fixing to said flexible spar (1), the device being **characterized in that** it includes at least one connection element (3, 4, 4', 35, 41, 41',46) providing a stiffening connection between the outer ends (9, 15, 9', 15') of the two balls (6, 6') of the two individual modules making up the combined device.

2. A device according to claim 1, **characterized in that** it has at least one intermediate plate (9, 9', 49, 49', 15, 15') providing said connection between the inner end of the laminated damper (7, 7') and the outer end of the ball (6, 6').

3. A device according to claim 1 or claim 2, **characterized in that** the connection element is a tube (41, 42, 44) surrounding both balls and providing said connection between the laminated dampers (7, 7') and the balls (6, 6') of the two individual modules constituting the combined device.

4. A device according to claim 1 or claim 2, **characterized in that** the connection element is an open tube (46, 48) providing the connection (48) between a laminated damper (7') and a ball (6') in one of the two individual modules, with the open edges (49) of said open tube being secured to the outer end of the ball (6) of the other individual module.

5. A device according to claim 1 or claim 2, **characterized in that** a said connection element is a part (3, 35) connecting together the facing outer ends of the two balls of the combined device.

6. A device according to claim 5, **characterized in that** a said connection element (3) is curved and presents a concave side facing towards said balls (6, 6') of the combined device.

7. A device according to claim 5, **characterized in that** a said piece is a tie bar (35).

8. A device according to claim 1, **characterized in that** it has a pair of connection elements (4, 4) each presenting a central region (49, 49') forming a connection between the inner end of a laminated damper (7, 7') and the outer end of a ball (6, 6'), and lying on at least one side beside a side region (41, 41') secured to a corresponding side region (41', 41) of the other connection element (4, 4) of the pair.

9. A device according to claim 1, **characterized in that** the connection element is molded on the ball (6).

10. A device according to any preceding claim, **characterized in that** the connection(s) (3, 4, 4', 35, 41, 41', 46) are dimensioned in such a manner that after assembly of the combined device, a first amount of compression prestress is applied to the balls (6, 6').

11. A device according to any preceding claim, **characterized in that** the elements (10) for assembling to the torque tube (2) for pitch control are dimensioned in such a manner that after assembly of the combined device, a second amount of compression prestress is applied to the laminated dampers (7, 7').

12. A device according to claims 10 and 11 taken together, **characterized in that** the first and second amounts of prestress have different values.

13. A helicopter rotor, **characterized in that** it includes at least one combined device according to any preceding claim, mounted between a said flexible spar (1) and a said torque tube (2) for controlling pitch.

14. A helicopter rotor according to claim 13, **characterized in that** at least one combined device is mounted with a first amount of prestress applied to the balls (6, 6').

15. A helicopter rotor according to claim 13 or claim 14, **characterized in that** at least one combined device is mounted with a second amount of compression prestress applied to the laminated dampers (7, 7').

16. A helicopter rotor according to claims 14 and 15, **characterized in that** the first and second amounts of prestress have different values.

## Patentansprüche

1. Kombinierte Dämpfer-Kugelgelenk-Vorrichtung zum Einbau zwischen einem flexiblen Arm (1), der ein Rotorblatt eines Helikopters mit einer Rotornabe verbindet, einerseits und einen Anstellwinkel-Ansteuerungsring (2) des Rotorblatts andererseits, die zwei Elementarmodule umfasst, die jeweils einen ebenen Lamellen-Dämpfer (7, 7') und ein Lamellen-Kugelgelenk-Element (6, 6') umfassen, wobei sich der Lamellen-Dämpfer (7, 7') zwischen einem äußeren Ende und einem inneren Ende erstreckt und an seinem äußeren Ende ein Element (10, 10') zur Befestigung an dem Anstellwinkel-Ansteuerungsring (2) des Helikopter-Rotorblatts aufweist und wobei das Lamellen-Kugelgelenk-Element (6, 6') einen Stapel aus Metall- und Elastomerschichten aufweist, wobei der Lamellen-Dämpfer (7, 7') mit seinem inneren Ende mit einem äußeren Ende des Kugelgelenk-Elements (6, 6') verbunden ist, dessen inneres Ende ein Element (8, 8') zur Befestigung an dem flexiblen Arm (1) aufweist, **dadurch gekennzeichnet, dass** sie wenigstens ein Verbindungselement (3, 4, 4', 35, 41, 41', 46) aufweist, das eine Versteifungsverbindung zwischen den äußeren Enden (9, 15, 9', 15') der zwei Kugelgelenk-Elemente (6, 6') der zwei Elementarmodule gewährleistet, die die kombinierte Vorrichtung bilden.

2. Vorrichtung nach Anspruch 1, **dadurch gekennzeichnet, dass** sie wenigstens einen dazwischenliegenden Anker (9, 9', 49, 49', 15, 15') umfasst, der die Verbindung zwischen dem inneren Ende des Lamellen-Dämpfers (7, 7') und dem äußeren Ende des Kugellager-Elements (6, 6') gewährleistet.

3. Vorrichtung nach einem der Ansprüche 1 oder 2, **dadurch gekennzeichnet, dass** das Verbindungselement ein Rohr (41, 42, 44) ist, das die zwei Kugelgelenk-Elemente umgibt und die Verbindung zwischen den Lamellen-Dämpfern (7, 7') und den Kugelgelenk-Elementen (6, 6') der zwei Elementarmodule gewährleistet, die die kombinierte Vorrichtung bilden.

4. Vorrichtung nach einem der Ansprüche 1 oder 2, **dadurch gekennzeichnet, dass** das Verbindungselement ein offenes Rohr (46, 48) ist, das die Verbindung (48) zwischen dem Lamellen-Dämpfer (7') und einem Kugelgelenk-Element (6') von einem der zwei Elementarmodule gewährleistet, wobei die offenen Ränder (49) des offenen Rohrs mit dem äußeren Ende des Kugelgelenk-Elements (6) des weiteren Elementarmoduls verbunden sind.

5. Vorrichtung nach einem der Ansprüche 1 oder 2, **dadurch gekennzeichnet, dass** ein solches Verbindungselement ein Teil (3, 35) ist, das die sich gegenüberliegenden äußeren Enden der zwei Kugelgelenk-Elemente der kombinierten Vorrichtung verbindet.

6. Vorrichtung nach Anspruch 5, **dadurch gekennzeichnet, dass** ein solches Verbindungselement (3) gewölbt ist und eine Konkavität aufweist, die in Richtung der Kugelgelenk-Elemente (6, 6') der kombinierten Vorrichtung gerichtet ist.

7. Vorrichtung nach Anspruch 5, **dadurch gekennzeichnet, dass** ein solches Teil ein Stehbolzen (35) ist.

8. Vorrichtung nach Anspruch 1, **dadurch gekennzeichnet, dass** sie ein Paar von Verbindungselementen (4, 4') umfasst, die jeweils einen mittleren Bereich (49, 49') aufweisen, der eine Verbindung zwischen dem inneren Ende eines Lamellen-Dämpfers (7, 7') und dem äußeren Ende eines Kugelgelenk-Elements (6, 6') bildet und der wenigstens an einer seitlichen Seite von einem seitlichen Bereich (41, 41') eingefasst ist, der mit einem entsprechenden seitlichen Bereich (41', 41) des weiteren Verbindungselements (4, 4') des Paars verbunden ist.

9. Vorrichtung nach Anspruch 1, **dadurch gekennzeichnet, dass** das Verbindungselement an ein Kugelgelenk-Element (6) angeformt ist.

10. Vorrichtung nach einem der vorherigen Ansprüche, **dadurch gekennzeichnet, dass** das oder die Verbindungselemente (3, 4, 4', 35, 41, 41', 46) derart dimensioniert sind, dass nach der Montage der kombinierten Vorrichtung eine erste Kompressionsvorspannung auf die Kugelgelenk-Elemente (6, 6') ausgeübt wird.

11. Vorrichtung nach einem der vorherigen Ansprüche, **dadurch gekennzeichnet, dass** die Elemente (10, 10') zur Befestigung an dem Anstellwinkel-Ansteuerungsring (2) derart dimensioniert sind, dass nach der Montage der kombinierten Vorrichtung eine zweite Kompressionsvorspannung auf die Lamellen-Dämpfer (7, 7') wirkt.

12. Vorrichtung nach den Ansprüchen 10 und 11 zusammen, **dadurch gekennzeichnet, dass** die erste und die zweite Vorspannung unterschiedliche Werte besitzen.

13. Helikopter-Rotor, **dadurch gekennzeichnet, dass** er wenigstens eine kombinierte Vorrichtung nach einem der vorherigen Ansprüche umfasst, die zwischen einem solchen flexiblen Arm (1) und einem solchen Anstellwinkel-Ansteuerungsring (2) eingebaut ist.

14. Helikopter-Rotor nach Anspruch 13, **dadurch gekennzeichnet, dass** wenigstens eine kombinierte Vorrichtung eingebaut ist, wobei eine erste Vorspannung auf die Kugelgelenk-Elemente (6, 6') ausgeübt wird.

15. Helikopter-Rotor nach einem der Ansprüche 13 oder 14, **dadurch gekennzeichnet, dass** wenigstens eine kombinierte Vorrichtung eingebaut ist, wobei eine zweite Kompressionsvorspannung auf die Lamellen-Elemente (7, 7') ausgeübt wird.

16. Helikopter-Rotor nach den Ansprüchen 14 und 15, **dadurch gekennzeichnet, dass** die erste und die zweite Vorspannung unterschiedliche Werte haben.
